# EUROPEAN PATENT SPECIFICATION

(11) **EP 4 477 996 B1**
(45) Date of publication and mention of the grant of the patent: **09.12.2026**
(21) Application number: 23902288.2
(22) Date of filing: 23.10.2023
(51) Int. Cl.: G01B 21/32, G01B 5/20, G01B 13/06, G01C 5/04, B29C 33/70

(54) **METHOD FOR MEASURING DEFORMATION OF MOLDED SURFACE OF WIND POWER BLADE MOLD**
VERFAHREN ZUR MESSUNG DER VERFORMUNG DER FORMFLÄCHE EINER WINDKRAFTSCHAUFELFORM
PROCÉDÉ POUR MESURER LA DÉFORMATION D'UNE SURFACE MOULÉE D'UN MOULE DE PALE D'ÉOLIENNE

(30) Priority: 14.12.2022 CN 202211608134
(43) Date of publication of application: 18.12.2024
(73) Proprietor: Beijing Composite Materials (Tengzhou) Co., Ltd., Zaozhuang, Shandong 277500 (CN)
(72) Inventor: HUANG, Shanghong, Zaozhuang, Shandong 277500 (CN); LI, Hui, Zaozhuang, Shandong 277500 (CN); MENG, Zhanguang, Zaozhuang, Shandong 277500 (CN); CHEN, Wankang, Zaozhuang, Shandong 277500 (CN); LI, Yiquan, Zaozhuang, Shandong 277500 (CN)
(74) Representative: Valea AB
(86) International application number: PCT/CN2023/125892
(87) International publication number: WO 2024/125088

(56) References cited:
- CN-A- 103 344 214
- CN-A- 107 255 467
- CN-A- 107 630 794
- CN-A- 109 029 349
- CN-A- 112 943 558
- CN-A- 116 164 697
- CN-U- 204 944 358
- KR-A- 20160 067 690
- US-A- 5 238 366
- US-A1- 2019 316 519

## Description

### TECHNICAL FIELD

The present application relates to the technical field of measuring deformation of a mold profile of a wind turbine blade mold, and in particular, to a method for measuring deformation of a mold profile of a wind turbine blade mold.

### BACKGROUND

Wind-receiving area and wind-receiving efficiency are two important factors that affect power generation efficiency of a wind turbine blade. The wind-receiving area depends on a length of the blade, and the wind-receiving efficiency depends on aerodynamic accuracy of the blade.

As a requirement for improved power generation efficiency in the field of wind power becomes more and more urgent, the wind turbine blade is becoming longer and longer in size to obtain a larger wind-receiving area. However, an increase in the size also puts forward higher requirements on the aerodynamic accuracy of the blade.

In terms of process, manufacturing of the wind turbine blade depends on a wind turbine blade mold, so accuracy of the wind turbine blade mold largely determines the accuracy of the blade. For measurement of the accuracy of the wind turbine blade mold, at present, a laser tracker is generally used in the industry to scan a surface of a product when the mold is empty and open. After determining a deformation state of the wind turbine blade, the mold is adjusted to qualified accuracy through an adjusting member at the bottom of the wind turbine blade mold. However, with the gradual development of technologies, this measurement method has become less and less advantageous.

Firstly, an artificial characteristic of data acquisition causes profile measurement and debugging time of the wind turbine blade mold to increase dramatically as the size of the mold increases.

Secondly, optical measurement has great restrictions on an environment, which can only be performed when the mold is open and no-load. However, accuracy of the mold under full load service is an operating condition required to be measured most.

Thirdly, the measurement method relies heavily on instruments, and a contradiction between a current high price of the laser tracker and a sharp increase in a number of molds to be debugged has become increasingly obvious, resulting in increasingly higher space and time deployment costs for the instruments.

D1 (KR20160067690A) relates to a wind turbine blade mold, more specifically, to a hydraulic drive device using electronic control and an automatic adjustment device for wind turbine blade molds that can be easily calibrated using information programmed by a three-dimensional measuring instrument through computer programming.

D2 (CN107255467A) provides a line shape automatic measurement system and method for concrete continuous beam bridge section construction. A static force level base station is arranged at the top of a pier of a bridge, and a static force level measuring point is arranged on a bottom die suspended below a hanging basket of the bridge; the static force level measuring point is connected with the static force level base station through a liquid pipe, a gas pipe and a data transmission line; the static force level measuring point is wirelessly connected with a cloud end.

### SUMMARY

With respect to the above deficiencies in the related art, the present application provides a method and apparatus for measuring deformation of a mold profile of a wind turbine blade mold. The method and apparatus do not require manual measurement; may measure deformation of the mold profile when the mold is closed and fully loaded; do not rely on deployment of laser tracker; and have lower management costs for debugging and maintenance of the mold.

In order to solve the above technical problems, the present application provides a method for measuring deformation of the mold profile of the wind turbine blade mold by using a hydrostatic level gauge, including the following steps:
(1) fixing a reference point at a height, and providing a measuring point on an outer wall of the wind turbine blade mold;
(2) after the wind turbine blade mold is debugged to a state with a qualified profile accuracy, setting the state to a reference state;
(3) measuring a first height difference between the reference point and the measuring point in the reference state, wherein the first height difference is set to a reference height difference h0;
(4) measuring a second height difference between the reference point and the measuring point after the wind turbine blade mold is used, wherein the second height difference is set to a process height difference h; and
(5) calculating a height difference variation according to the process height difference h and the reference height difference h0, wherein the height difference variation is a deformation state of the wind turbine blade mold;
   if h-h0>0, indicating that the mold profile of the measuring point moves upward, and
   if h-h0<0, indicating that the mold profile of the measuring point moves downward.

Optionally, the height difference variations of all of the measuring points are displayed in a visual mode to obtain the deformation state of the wind turbine blade mold.

Optionally, a plurality of measuring points are provided, and the plurality of the measuring points are arranged at equal intervals on the outer wall of the wind turbine blade mold.

Optionally, when a high-low deformation state at a longitudinal section position of the wind turbine blade mold is measured, the plurality of the measuring points in step (1) are longitudinally arranged at intervals on the outer wall at a longitudinal section of the wind turbine blade mold.

Optionally, when a high-low deformation state at a transverse section position of the wind turbine blade mold is measured, the plurality of the measuring points in step (1) are transversely arranged at intervals on the outer wall at a transverse section of the wind turbine blade mold.

Optionally, when an overall profile deformation state of the wind turbine blade mold is measured, the plurality of the measuring points in step (1) are arranged in an array on the outer wall of the wind turbine blade mold.

Compared with the related art, the present application has the following beneficial effects.
1. The present application is featured with automation and continuity, which can spontaneously measure the deformation state of the wind turbine blade mold and provide feedback without manual measurement.
2. In the present application, mold profile deformation of the wind turbine blade mold when the mold is closed and fully loaded can be measured, which is closer to pain points of industry profile measurement, so that the wind turbine blade is more accurate, thereby improving production capacity and quality.
3. In the present application, a high-precision and low-cost hydrostatic level sensor is used, so that the wind turbine blade mold no longer relies on the deployment of the laser tracker, leading to lower management costs for debugging and maintenance of the mold.

### BRIEF DESCRIPTION OF THE DRAWINGS

To illustrate the background or technical solutions of the present application more clearly, the accompanying drawings used in conjunction with specific implementations are briefly introduced below. Obviously, the structure, ratio, size, and the like shown in the accompanying drawings of the specification are only used to match the content disclosed in the specification for those skilled in art to read and understand and are not used to limit implementation conditions of the present application and have no technical significance. Any proportional relationship change, or size adjustment shall still fall within the scope of the technical content disclosed in the present application without affecting the effects and objectives that can be achieved by the present application.
FIG. 1 is a schematic diagram of an implementation process according to a specific implementation of the present application;
FIG. 2 is a schematic side view of arrangement positions of measuring points according to Embodiment 1 in a specific implementation of the present application;
FIG. 3 is a schematic top view of arrangement positions of measuring points according to Embodiment 1 in a specific implementation of the present application;
FIG. 4 is a schematic top view of arrangement positions of measuring points according to Embodiment 2 in a specific implementation of the present application; and
FIG. 5 is a schematic top view of arrangement positions of measuring points according to Embodiment 3 in a specific implementation of the present application.

In the drawings, 1: wind turbine blade mold; 2: reference point; 3: measuring point.

### DETAILED DESCRIPTION

To enable those in the art to better understand the technical solutions in the present application, the technical solutions in the embodiments of the present application will be clearly and completely described below in conjunction with the drawings in the embodiments of the present application. Obviously, the described embodiments are merely some of rather than all of the embodiments of the present application.

Meanwhile, the orientation or position relationships indicated by the terms cited in the specification such as "central", "longitudinal", "transverse", "upper", "lower", "front", "back", "left", "right", "vertical", "horizontal", "top", "bottom", "inner", and "outer" are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application. Changes or adjustments in the relative relationship thereof, provided there is no substantial change in the technical content, shall also be deemed to be within the scope of implementation of the present application.

At the same time, in the description of the specification, it is to be noted that unless otherwise specified and defined explicitly, the terms "mount", "join", and "connect" should be understood in a broad sense, such as a fixed connection, a detachable connection, or an integral connection; a mechanical connection or electrical connection; or a direct connection, an indirect connection via an intermediate medium, or an internal connection between two elements. Those of ordinary skill in the art can understand specific meanings of these terms in the present application according to specific situations.

The present application provides a low-cost, high-precision, and high-continuity method for measuring deformation of a mold profile of a wind turbine blade mold based on hydrostatic level gauges, in which, by reasonably distributing the hydrostatic level gauges on a back surface of the wind turbine blade mold, an overall deformation state of the wind turbine blade mold is fed back through elevation changes of respective points.

Specifically, the core idea of the present application is to reflect a height difference change in a vertical direction of measuring point positions by measuring a height difference between a hydrostatic level on a profile (a measuring point 3) and a hydrostatic level at a fixed height (a reference point 2); and to reflect the overall deformation state of the wind turbine blade mold through height difference changes of all measuring points.

In use, the measuring point feeds back a deformation state at a measurement position to a computer in real time, and an axis, a longitudinal section, and an overall profile deformation state in mold opening and closing states can be measured.

### Embodiment 1

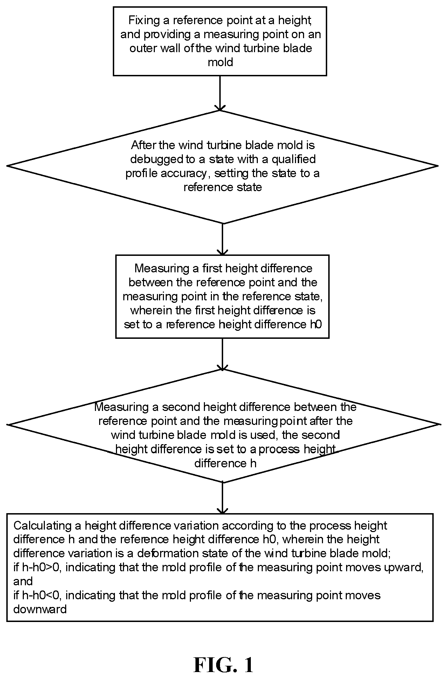

As shown in FIG. 1, this embodiment discloses a wind turbine blade mold profile deformation measurement method to measure a height deformation state at a certain longitudinal section position of a mold, including the following step (1) to step (5).
(1) A height of a reference point 2 is fixed, and a plurality of measuring points 3 are longitudinally arranged at intervals on an outer wall at any longitudinal section of a wind turbine blade mold 1.
(2) After the wind turbine blade mold 1 is debugged to a qualified profile accuracy, this state is set to a reference state.
(3) A height difference between the reference point 2 and the measuring point 3 in the reference state is measured, which is set to a reference height difference h0.
(4) A height difference between the reference point 2 and the measuring point 3 after the wind turbine blade mold 1 is used is measured, which is set to a process height difference h.
(5) A height difference variation is calculated according to the process height difference h and the reference height difference h0, which is a deformation state of the wind turbine blade mold;
   if h-h0>0, it indicates that a position profile of the measuring point moves upward, and
   if h-h0<0, it indicates that the position profile of the measuring point moves downward.

Height difference variations of all the measuring points 3 are displayed in a visual mode to obtain a high-low deformation state at the longitudinal section position of the wind turbine blade mold 1.

A plurality of measuring points 3 are provided, and the plurality of the measuring points 3 are arranged at equal intervals on the outer wall of the wind turbine blade mold 1.

In actual operation, a plurality of (a specific number is determined by a user based on an actual size of the mold) measuring points 3 may be provided, and the plurality of the measuring points 3 are arranged at equal intervals on the outer wall of the wind turbine blade mold 1. The arrangement at equal intervals is more conducive to uniformity of data acquisition and improves data accuracy.

A hydrostatic level is used for measurement in the wind turbine blade mold profile deformation measurement method. In use, it is to be ensured that the hydrostatic level is in a balanced state and a water surface in the hydrostatic level is stable and has no fluctuations.

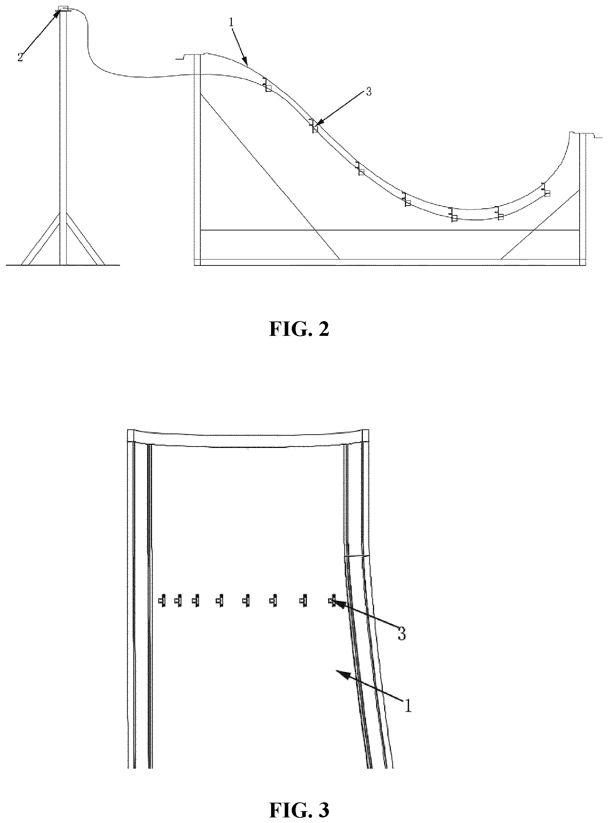

As shown in FIG. 2 and FIG. 3, this description further discloses a measurement apparatus used in the wind turbine blade mold profile deformation measurement method, that is, a wind turbine blade mold profile deformation measurement apparatus, including a reference point height measuring module, a measuring point height measuring module, a data acquisition module, and a display module.

The reference point height measuring module is configured to measure a height of a reference point 2, and the height of the reference point 2 is fixed.

The measuring point height measuring module is configured to measure a height of a measuring point 3. A plurality of measuring points 3 are longitudinally arranged at intervals on an outer wall at a longitudinal section of a wind turbine blade mold 1. The measuring point height measuring module is configured to measure a height of the measuring point 3 in a reference state of the wind turbine blade mold 1 and configured to measure a height of the measuring point 3 after the wind turbine blade mold 1 is used.

The data acquisition module is configured to receive a first reference point height value measured by the reference point height measuring module and a first measuring point height value measured by the measuring point height measuring module in the reference state of the wind turbine blade mold 1, and calculate a height difference between the first measuring point height value and the first reference point height value to obtain a reference height difference h0; and configured to receive a second reference point height value measured by the reference point height measuring module and a second measuring point height value measured by the measuring point height measuring module after the wind turbine blade mold 1 is used, calculate a height difference between the second measuring point height value and the second reference point height value to obtain a process height difference h, and calculate a height difference variation according to the process height difference h and the reference height difference h0.

The display module is configured to display the height difference variation calculated by the data acquisition module.

Both the reference point height measuring module and the measuring point height measuring module are hydrostatic level gauges. The use of the hydrostatic level achieves a beneficial effect that the hydrostatic level has advantages of a low cost and accurate height difference measurement, which is very suitable for the present application.

In actual use, a plurality of measuring points 3 are provided, and a plurality of hydrostatic level gauges configured to measure the heights of the measuring points may be connected end to end internally and longitudinally arranged at intervals on the outer wall at the longitudinal section of the wind turbine blade mold 1. The hydrostatic level gauges are arranged at equal intervals. The arrangement at equal intervals is more conducive to uniformity of data acquisition and improves data accuracy.

The measuring point 3 at a head end is connected to the reference point 2, and the reference point 2 is connected to a liquid storage tank. The reference point 2 is connected to a gateway, the gateway is connected to a base station, the base station is connected to a cloud server, and the cloud server is connected to a computer. In use, the reference point 2 and the measuring point 3 may feed a real-time state back to the computer through the gateway and the cloud server to facilitate monitoring by staff.

In this embodiment, several hydrostatic level gauges (measuring points 3) are mounted at any longitudinal section position on the outer wall of the wind turbine blade mold 1, and a high-low deformation state at the section position can be obtained.

### Embodiment 2

As shown in FIG. 1, this embodiment discloses a wind turbine blade mold profile deformation measurement method to measure a height deformation state at a certain transverse section position of a mold, including the following step (1) to step (5).
(1) A height of a reference point 2 is fixed, and a plurality of measuring points 3 are transversely arranged at intervals on an outer wall at any transverse section of a wind turbine blade mold 1.
(2) After the wind turbine blade mold 1 is debugged to a qualified profile accuracy, this state is set to a reference state.
(3) A height difference between the reference point 2 and the measuring point 3 in the reference state is measured, which is set to a reference height difference h0.
(4) A height difference between the reference point 2 and the measuring point 3 after the wind turbine blade mold 1 is used is measured, which is set to a process height difference h.
(5) A height difference variation is calculated according to the process height difference h and the reference height difference h0, which is a deformation state of the wind turbine blade mold;
   if h-h0>0, it indicates that a position profile of the measuring point moves upward, and
   if h-h0<0, it indicates that the position profile of the measuring point moves downward.

Height difference variations of all the measuring points 3 are displayed in a visual mode to obtain a high-low deformation state at the transverse section position of the wind turbine blade mold 1.

A plurality of measuring points 3 are provided, and the plurality of the measuring points 3 are arranged at equal intervals on the outer wall of the wind turbine blade mold 1.

In actual operation, a plurality of (a specific number is determined by a user based on an actual size of the mold) measuring points 3 may be provided, and the plurality of the measuring points 3 are arranged at equal intervals on the outer wall of the wind turbine blade mold 1. The arrangement at equal intervals is more conducive to uniformity of data acquisition and improves data accuracy.

A hydrostatic level is used for measurement in the wind turbine blade mold profile deformation measurement method. In use, it is to be ensured that the hydrostatic level is in a balanced state and a water surface in the hydrostatic level is stable and has no fluctuations.

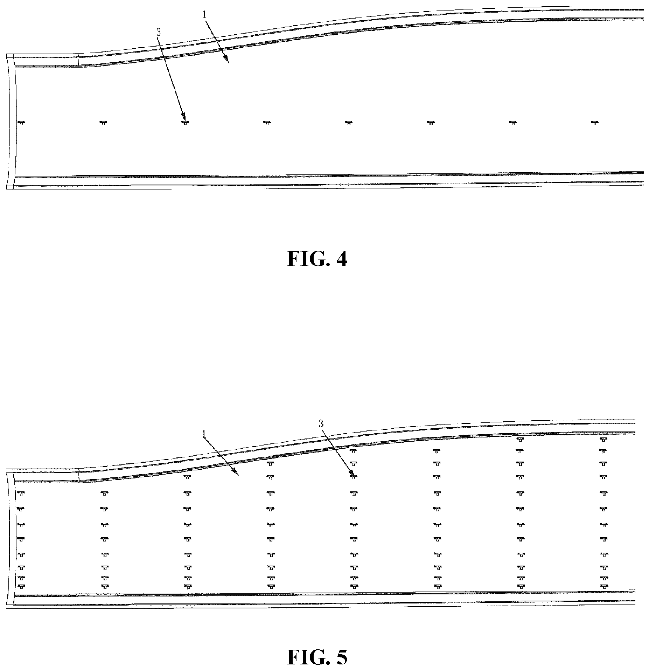

As shown in FIG. 4, this description further discloses a measurement apparatus used in the wind turbine blade mold profile deformation measurement method, that is, a wind turbine blade mold profile deformation measurement apparatus, including a reference point height measuring module, a measuring point height measuring module, a data acquisition module, and a display module.

The reference point height measuring module is configured to measure a height of a reference point 2, and the height of the reference point 2 is fixed.

The measuring point height measuring module is configured to measure a height of a measuring point 3. A plurality of measuring points 3 are transversely arranged at intervals on an outer wall at a transverse section of a wind turbine blade mold 1. The measuring point height measuring module is configured to measure a height of the measuring point 3 in a reference state of the wind turbine blade mold 1 and configured to measure a height of the measuring point 3 after the wind turbine blade mold 1 is used.

The data acquisition module is configured to receive a first reference point height value measured by the reference point height measuring module and a first measuring point height value measured by the measuring point height measuring module in the reference state of the wind turbine blade mold 1, and calculate a height difference between the first measuring point height value and the first reference point height value to obtain a reference height difference h0; and configured to receive a second reference point height value measured by the reference point height measuring module and a second measuring point height value measured by the measuring point height measuring module after the wind turbine blade mold 1 is used, calculate a height difference between the second measuring point height value and the second reference point height value to obtain a process height difference h, and calculate a height difference variation according to the process height difference h and the reference height difference h0.

The display module is configured to display the height difference variation calculated by the data acquisition module.

Both the reference point height measuring module and the measuring point height measuring module are hydrostatic level gauges. The use of the hydrostatic level achieves a beneficial effect that the hydrostatic level has advantages of a low cost and accurate height difference measurement, which is very suitable for the present application.

In actual use, a plurality of measuring points 3 are provided, and a plurality of hydrostatic level gauges configured to measure the heights of the measuring points may be connected end to end internally and transversely arranged at intervals on the outer wall at the transverse section of the wind turbine blade mold 1. The hydrostatic level gauges are arranged at equal intervals. The arrangement at equal intervals is more conducive to uniformity of data acquisition and improves data accuracy.

The measuring point 3 at a head end is connected to the reference point 2, and the reference point 2 is connected to a liquid storage tank. The reference point 2 is connected to a gateway, the gateway is connected to a base station, the base station is connected to a cloud server, and the cloud server is connected to a computer. In use, the reference point 2 and the measuring point 3 may feed a real-time state back to the computer through the gateway and the cloud server to facilitate monitoring by staff.

In this embodiment, several hydrostatic level gauges (measuring points 3) are mounted at any transverse section position on the outer wall of the wind turbine blade mold, and a high-low deformation state at the transverse section position of the wind turbine blade mold 1 can be obtained.

### Embodiment 3

As shown in FIG. 1, this embodiment discloses a wind turbine blade mold profile deformation measurement method to measure an overall profile change of a wind turbine blade mold in a certain state, including the following step (1) to step (5).
(1) A height of a reference point 2 is fixed, and a plurality of measuring points 3 are arranged in an array on an outer wall of a wind turbine blade mold. Specifically, for example, a plurality of columns or rows of measuring points are arranged in parallel at equal intervals along a longitudinal or transverse direction of the mold. Each column or row of measuring points includes a plurality of measuring points arranged along a cross section of the mold, and the measuring points are arranged at equal intervals.
(2) After the wind turbine blade mold 1 is debugged to a qualified profile accuracy, this state is set to a reference state.
(3) A height difference between the reference point 2 and the measuring point 3 in the reference state is measured, which is set to a reference height difference h0.
(4) A height difference between the reference point 2 and the measuring point 3 after the wind turbine blade mold 1 is used is measured, which is set to a process height difference h.
(5) A height difference variation is calculated according to the process height difference h and the reference height difference h0, which is a deformation state of the wind turbine blade mold;
   if h-h0>0, it indicates that a position profile of the measuring point moves upward, and
   if h-h0<0, it indicates that the position profile of the measuring point moves downward.

Height difference variations of all the measuring points 3 are displayed in a visual mode to obtain an overall profile deformation state of the wind turbine blade mold 1.

A plurality of measuring points 3 are provided, and the plurality of the measuring points 3 are arranged at equal intervals on the outer wall of the wind turbine blade mold 1.

In actual operation, a plurality of (a specific number is determined by a user based on an actual size of the mold) measuring points 3 may be provided, and the plurality of the measuring points 3 are arranged at equal intervals on the outer wall of the wind turbine blade mold 1. The arrangement at equal intervals is more conducive to uniformity of data acquisition and improves data accuracy.

A hydrostatic level is used for measurement in the wind turbine blade mold profile deformation measurement method. In use, it is to be ensured that the hydrostatic level is in a balanced state and a water surface in the hydrostatic level is stable and has no fluctuations.

As shown in FIG. 5, this description further discloses a measurement apparatus used in the wind turbine blade mold profile deformation measurement method, that is, a wind turbine blade mold profile deformation measurement apparatus, including a reference point height measuring module, a measuring point height measuring module, a data acquisition module, and a display module.

The reference point height measuring module is configured to measure a height of a reference point 2, and the height of the reference point 2 is fixed.

The measuring point height measuring module is configured to measure a height of a measuring point 3. A plurality of measuring points 3 are arranged in an array on an outer wall of the wind turbine blade mold. The measuring point height measuring module is configured to measure a height of the measuring point 3 in a reference state of the wind turbine blade mold 1 and configured to measure a height of the measuring point 3 after the wind turbine blade mold 1 is used.

The data acquisition module is configured to receive a first reference point height value measured by the reference point height measuring module and a first measuring point height value measured by the measuring point height measuring module in the reference state of the wind turbine blade mold 1, and calculate a height difference between the first measuring point height value and the first reference point height value to obtain a reference height difference h0; and configured to receive a second reference point height value measured by the reference point height measuring module and a second measuring point height value measured by the measuring point height measuring module after the wind turbine blade mold 1 is used, calculate a height difference between the second measuring point height value and the second reference point height value to obtain a process height difference h, and calculate a height difference variation according to the process height difference h and the reference height difference h0.

The display module is configured to display the height difference variation calculated by the data acquisition module.

Both the reference point height measuring module and the measuring point height measuring module are hydrostatic level gauges. The use of the hydrostatic level achieves a beneficial effect that the hydrostatic level has advantages of a low cost and accurate height difference measurement, which is very suitable for the present application.

In actual use, a plurality of measuring points 3 are provided, and a plurality of hydrostatic level gauges configured to measure the heights of the measuring points may be connected end to end internally and arranged in an array on the outer wall of the wind turbine blade mold. The hydrostatic level gauges are arranged at equal intervals. The arrangement at equal intervals is more conducive to uniformity of data acquisition and improves data accuracy.

The measuring point 3 at a head end is connected to the reference point 2, and the reference point 2 is connected to a liquid storage tank. The reference point 2 is connected to a gateway, the gateway is connected to a base station, the base station is connected to a cloud server, and the cloud server is connected to a computer. In use, the reference point 2 and the measuring point 3 may feed a real-time state back to the computer through the gateway and the cloud server to facilitate monitoring by staff.

In this embodiment, several hydrostatic level gauges (measuring points 3) are evenly arranged in an array and mounted on the outer wall of the wind turbine blade mold, and the overall profile deformation of the wind turbine blade mold 1 in this state can be obtained by fitting a relationship between height changes of the points.

Based on the various shortcomings of the current laser tracker, in the present application, a profile measurement method is developed using low-cost hydrostatic level sensors, which facilitates accurate measurement of height differences by the hydrostatic level gauges. The sensors are evenly distributed on a non-product side (i.e., a back side) of the mold to achieve continuous and accurate measurement of the wind turbine blade mold in both mold opening and mold closing states.

The present application is described in detail with reference to the accompanying drawings and in combination with the preferred embodiments, but the present application is not limited thereto. Changes or replacements that can be easily envisaged within the technical scope disclosed in the present application by any person skilled in the art should all fall within the protection scope of the present application. Therefore, the protection scope of the present application should be subjected to the protection scope of the claims.

## Claims

1. A method for measuring deformation of a mold profile of a wind turbine blade mold (1) by using a hydrostatic level gauge, comprising the following steps:
fixing a reference point (2) at a height, and providing a measuring point (3) on an outer wall of the wind turbine blade mold (1);
after the wind turbine blade mold (1) is debugged to a state with a qualified profile accuracy, setting the state to a reference state;
measuring a first height difference between the reference point (2) and the measuring point (3) in the reference state, wherein the first height difference is set to a reference height difference h0;
measuring a second height difference between the reference point (2) and the measuring point (3) after the wind turbine blade mold (1) is used, wherein the second height difference is set to a process height difference h; and
calculating a height difference variation according to the process height difference h and the reference height difference h0, wherein the height difference variation is a deformation state of the wind turbine blade mold (1);
if h-h0>0, indicating that the mold profile of the measuring point (3) moves upward, and
if h-h0<0, indicating that the mold profile of the measuring point (3) moves downward.

2. The method according to claim 1, wherein the height difference variations of all of the measuring points (3) are displayed in a visual mode to obtain the deformation state of the wind turbine blade mold (1).

3. The method according to claim 1, wherein a plurality of measuring points (3) are provided, and the plurality of the measuring points (3) are arranged at equal intervals on the outer wall of the wind turbine blade mold (1).

4. The method according to claim 3, wherein when a high-low deformation state at a longitudinal section position of the wind turbine blade mold (1) is measured, the plurality of the measuring points (3) provided on the outer wall of the wind turbine blade mold (1) are longitudinally arranged at intervals on the outer wall at a longitudinal section of the wind turbine blade mold (1).

5. The method according to claim 3, wherein when a high-low deformation state at a transverse section position of the wind turbine blade mold (1) is measured, the plurality of the measuring points (3) provided on the outer wall of the wind turbine blade mold (1) are transversely arranged at intervals on the outer wall at a transverse section of the wind turbine blade mold (1).

6. The method according to claim 3, wherein when an overall profile deformation state of the wind turbine blade mold (1) is measured, the plurality of the measuring points (3) provided on the outer wall of the wind turbine blade mold (1) are arranged in an array on the outer wall of the wind turbine blade mold (1).

## Patentansprüche

1. Verfahren zum Messen einer Verformung eines Formprofils einer Windturbinenblattform (1) unter Verwendung eines hydrostatischen Nivelliergeräts, umfassend die folgenden Schritte:
Festlegen eines Bezugspunkts (2) auf einer bestimmten Höhe und Vorsehen eines Messpunkts (3) an einer Außenwand der Windturbinenblattform (1);
nachdem die Windturbinenblattform (1) so justiert wurde, dass ihre Profilgenauigkeit den Anforderungen entspricht, Festlegen dieses Zustands als Referenzzustand;
Messen eines ersten Höhenunterschieds zwischen dem Bezugspunkt (2) und dem Messpunkt (3) im Referenzzustand, wobei der erste Höhenunterschied als Referenzhöhenunterschied h0 festgelegt wird;
Messen eines zweiten Höhenunterschieds zwischen dem Bezugspunkt (2) und dem Messpunkt (3) nach der Verwendung der Windturbinenblattform (1), wobei der zweite Höhenunterschied als Prozesshöhenunterschied h festgelegt wird; und
Berechnen einer Höhenunterschiedsänderung anhand des Prozesshöhenunterschieds h und des Referenzhöhenunterschieds h0, wobei die Höhenunterschiedsänderung einen Verformungszustand der Windturbinenblattform (1) angibt;
wobei, wenn h - h0 > 0 ist, dies anzeigt, dass sich das Formprofil am Messpunkt (3) nach oben verlagert hat, und
wenn h - h0 < 0 ist, dies anzeigt, dass sich das Formprofil am Messpunkt (3) nach unten verlagert hat.

2. Verfahren nach Anspruch 1, wobei die Höhenunterschiedsänderungen sämtlicher Messpunkte (3) in einer visualisierten Form dargestellt werden, um den Verformungszustand der Windturbinenblattform (1) zu erhalten.

3. Verfahren nach Anspruch 1, wobei eine Mehrzahl von Messpunkten (3) vorgesehen ist und die Mehrzahl von Messpunkten (3) in gleichen Abständen an der Außenwand der Windturbinenblattform (1) angeordnet ist.

4. Verfahren nach Anspruch 3, wobei, wenn ein Höhenverformungszustand an einer Längsschnittposition der Windturbinenblattform (1) gemessen wird, die Mehrzahl von Messpunkten (3), die an der Außenwand der Windturbinenblattform (1) vorgesehen sind, an der Außenwand im Bereich eines Längsschnitts der Windturbinenblattform (1) in Längsrichtung beabstandet angeordnet ist.

5. Verfahren nach Anspruch 3, wobei, wenn ein Höhenverformungszustand an einer Querschnittsposition der Windturbinenblattform (1) gemessen wird, die Mehrzahl von Messpunkten (3), die an der Außenwand der Windturbinenblattform (1) vorgesehen sind, an der Außenwand im Bereich eines Querschnitts der Windturbinenblattform (1) in Querrichtung beabstandet angeordnet ist.

6. Verfahren nach Anspruch 3, wobei, wenn ein Gesamtverformungszustand des Formprofils der Windturbinenblattform (1) gemessen wird, die Mehrzahl von Messpunkten (3), die an der Außenwand der Windturbinenblattform (1) vorgesehen sind, in einer Matrix an der Außenwand der Windturbinenblattform (1) angeordnet ist.

## Revendications

1. Procédé de mesure de déformations d'un profil de moule d'un moule de pale d'éolienne (1) en utilisant un niveau hydrostatique, comprenant les étapes suivantes :
fixer un point de référence (2) à une hauteur, et fournir un point de mesure (3) sur une paroi externe du moule de pale d'éolienne (1) ;
après que le moule de pale d'éolienne (1) a été mis à un état avec une précision de profil qualifiée, définir l'état comme état de référence ;
mesurer une première différence de hauteur entre le point de référence (2) et le point de mesure (3) dans l'état de référence, la première différence de hauteur étant définie comme différence de hauteur de référence h0 ;
mesurer une seconde différence de hauteur entre le point de référence (2) et le point de mesure (3) après l'utilisation du moule de pale d'éolienne (1), la seconde différence de hauteur étant définie comme différence de hauteur de processus h ; et
calculer une variation de différence de hauteur en fonction de la différence de hauteur de processus h et de la différence de hauteur de référence h0, la variation de différence de hauteur étant un état de déformation du moule de pale d'éolienne (1) ;
si h-h0>0, indiquer que le profil de moule du point de mesure (3) se déplace vers le haut, et
si h-h0<0, indiquer que le profil de moule du point de mesure (3) se déplace vers le bas.

2. Procédé selon la revendication 1, dans lequel les variations de différence de hauteur de tous les points de mesure (3) sont affichées en mode visuel afin d'obtenir l'état de déformation du moule de pale d'éolienne (1).

3. Procédé selon la revendication 1, dans lequel une pluralité de points de mesure (3) sont prévus, et la pluralité de points de mesure (3) sont agencés à intervalles égaux sur la paroi externe du moule de pale d'éolienne (1).

4. Procédé selon la revendication 3, dans lequel, lorsqu'un état de déformation haut-bas à une position de section longitudinale du moule de pale d'éolienne (1) est mesuré, la pluralité de points de mesure (3) prévus sur la paroi externe du moule de pale d'éolienne (1) sont agencés longitudinalement à intervalles sur la paroi externe à une section longitudinale du moule de pale d'éolienne (1).

5. Procédé selon la revendication 3, dans lequel, lorsqu'un état de déformation haut-bas à une position de section transversale du moule de pale d'éolienne (1) est mesuré, la pluralité de points de mesure (3) prévus sur la paroi externe du moule de pale d'éolienne (1) sont agencés transversalement à intervalles sur la paroi externe à une section transversale du moule de pale d'éolienne (1).

6. Procédé selon la revendication 3, dans lequel lorsqu'un état de déformation de profil global du moule de pale d'éolienne (1) est mesuré, la pluralité de points de mesure (3) prévus sur la paroi externe du moule de pale d'éolienne (1) sont agencés en réseau sur la paroi externe du moule de pale d'éolienne (1).
